# EUROPEAN PATENT APPLICATION

(11) **EP 0 936 835 A2**
(43) Date of publication of application: **18.08.1999**
(21) Application number: 99300998.4
(22) Date of filing: 11.02.1999
(51) Int. Cl.: H04Q 11/04

(54) **Telecommunications system**

(30) Priority: 16.02.1998 GB 9803187; 18.08.1998 GB 9817848
(71) Applicant: MARCONI COMMUNICATIONS LIMITED, Coventry, CV3 1HJ (GB)
(72) Inventor: Proctor, Richard John, Wimbourne, Dorset, BH21 3QY (GB)
(74) Representative: Branfield, Henry Anthony

(57) **Abstract**

In telecommunications system comprising a network of interconnected telephone exchanges, a number of adapters provide at least some of the telephone exchanges with a means of communication of traffic via a number of cross-connects, e.g. ATM cross-connects. Control of traffic flow between the adapters and the telephone exchanges is implemented according to ISDN User Part (ISUP) protocol, National User Part (NUP) protocol or Q.50 protocol.

## Description

The current invention relates to telecommunication systems such as telephone networks comprising a plurality of interconnected telephone exchanges and communication between them.

Related GB patent applications number 9803186.7 and 9806862.0 concern the interconnection of telephone exchanges via one or more cross-connects and the use of an adapter to enable current telephone exchanges to communicate via such cross-connects. Currently installed telecommunications networks typically comprise a variety of different types of telephone exchange from various manufacturers. There is therefore a need to provide a means for interworking of the adapter of the above related patent applications with a variety of telephone exchanges. It is an object of the present invention to provide such a means.

Related unpublished GB patent application number 9803187.5 describes the implementation of flow control in a telecommunications system between the adapter of the present invention and an associated telephone exchange by means of Q.50 protocol. The Q.50 protocol is defined by the International Telecommunications Union (ITU).

The present invention provides a telecommunications system comprising a network of interconnected telephone exchanges and adapters, the adapters arranged to provide at least some of the telephone exchanges with a means of communication of traffic via the network in which the adapters are arranged to control traffic flow between the adapters and the telephone exchanges.

In a preferred embodiment the invention provides the telecommunications system in which the adapters are arranged to implement the control of traffic flow according to ISDN User Part (ISUP) protocol.

In a preferred embodiment the invention provides the telecommunications system in which the adapters are arranged to implement the control of traffic flow according to National User Part (NUP) protocol.

In a preferred embodiment the invention provides the telecommunications system in which the adapters are arranged to implement the control of traffic flow according to Q.50 protocol.

The present invention also provides the telecommunications system in which the network comprises one or more cross-connects for interconnecting at least some of the telephone exchanges via the adapters.

An embodiment of the invention will now be described by way of example with reference to the drawings in which:
Figure 1 shows in block diagram form a large telecommunications network with cross-connects according to the aforementioned, related patent applications;
Figure 2 shows a part of the network of Figure 1 in more detail showing the adapters and their connections to the exchanges according to an embodiment of the present invention:
Figure 3 shows an arrangement of an adapter according to an embodiment of the invention relating to quasi-associated signalling;
Figure 4 shows an arrangement of an adapter according to an embodiment of the invention relating to STP paths.

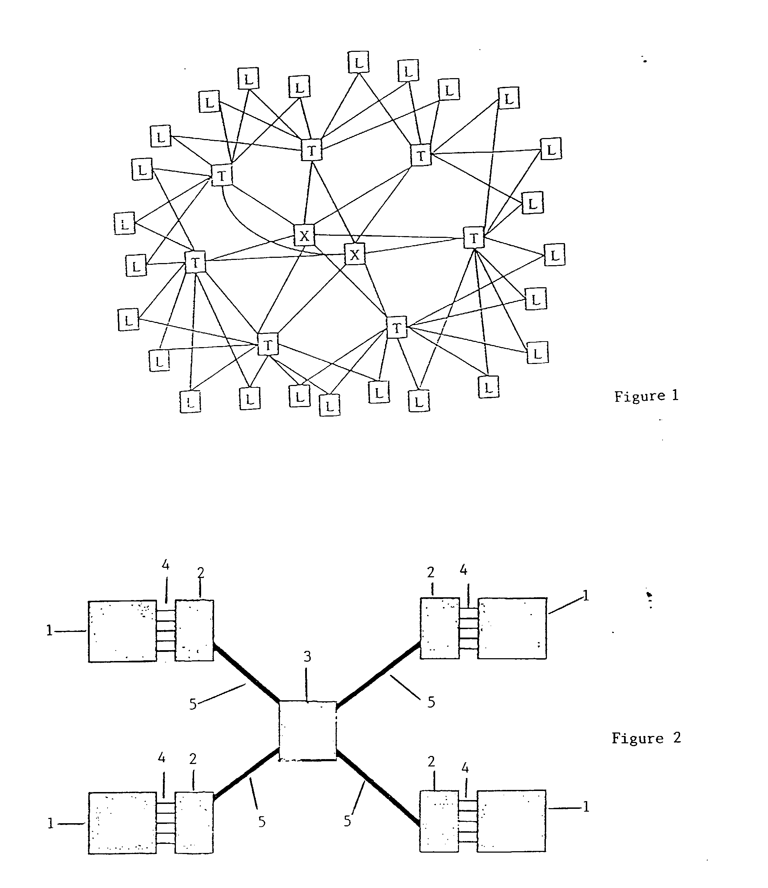

Figure 1 shows a typical large network comprising a number of local exchanges L interconnected via trunk exchanges T. Each local exchange is connected to two (or more) trunk exchanges. Conventionally the trunk exchanges are fully meshed. However, in the arrangement of Figure 1 two cross-connects X are shown each connected to every trunk exchange T. Rather than a large number of low bandwidth connections the trunk interconnect now consists of a few high bandwidth connections.

Advantageously, the cross-connects are ATM switches and communication between the telephone exchanges and the cross-connects is via ATM virtual paths. Adapters are therefore needed at exchanges to transform non-packetised, non-ATM traffic into packetised ATM form for transmission over the new trunk interconnect.

The adapter functions to convert traffic for sending to the cross-connects into packets and to re-convert packets received from the cross-connects to un-packetised form. In one embodiment the adapter provides interworking between a PSTN trunk (as per ITU-T G.703/G.704) and an ATM domain to allow ATM to be used to provide an efficient and flexible interconnect between exchanges by using variable bandwidth (ATM) routes.

For interfacing with STM networks, the adapter provides interworking between ATM and STM, with preferably one adapter for each route via the cross-connects. These adapters perform interworking between 2M bit/s pulse-code modulation (PCM) traffic and ATM and also provide a means to connect signalling directly with each of the other local exchanges. These adapters communicate with each of the processor clusters as most of the signalling traffic passes through them.

The adapter can preferably be programmed for different types of adaptation to allow for various ATM adaptation methods, and any other special handling.

As can be seen from Figure 2, exchanges are associated with adapters for communication via the cross-connects. For simplicity, only four exchanges are shown communicating via a single cross-connect but a much larger number of exchanges can be supported, the number of cross-connects normally being at least four. As can be seen from Figure 2, the connection between each adapter 2 and its associated exchange 1 comprises a number of circuits 4, with a number of PCMs dedicated to each route.

Under normal load conditions the adapters 2 packetise traffic on the active channels and send them across the network to other adapters on far end exchanges. From adapter to adapter via the cross-connect 3, routes 5 are packed on to virtual paths: each adapter 2 providing a dedicated virtual path to each of the destination exchanges across the network. The use of virtual paths allows dynamic changing of route bandwidths in response to change in demands across the network.

The physical link from a telephone exchange to the adapter associated with that exchange is full size, with individual routes each allocated a physical circuit between the exchange and the adapter. This is over-provisioned compared with the physical network capacity of the routes 5 between the adapters 2 and the cross-connects 3. The PCM traffic is packetised and routed to the appropriate far-end exchange across the cross-connect network. The number of PCM connections from each adapter 2 to the associated exchange 1 is such that the adapter cannot handle the traffic load if each PCM connection is busy if this leads to the traffic received from an exchange 1 exceeding the traffic handling capacity of the route 5 from the adapter 2 via the cross-connects 3. This presents a problem with potential loss of data in periods of peak traffic.

If an adapter that is not integrated into the associated exchange is to exploit the statistical nature of the traffic to achieve statistical gain it will need feedback to provide control for overload situations. There is therefore a need for some form of flow control between the adapter 2 and its associated exchange 1. This flow control can also be described as a back-off capability. With the arrangement of the invention, if the total traffic into an adapter gets too large it informs the associated exchange to back-off by sending information using ISUP protocol. In a similar way an adapter 2 may receive more traffic via the cross-connect 3 than it can pass on to the associated exchange over the dedicated circuits 4, for example in the case of a local malfunction. If the adapter is approaching this form of overload, it informs the corresponding far-end adapters which then force the corresponding route to the far-end associated exchanges to back-off but leave the other routes unaffected.

If an adapter detects the load at greater than some threshold, it stops accepting new traffic. This can be either locally to stop originating traffic, or force remote adapters to enforce a back-off on routes to themselves to hold terminating traffic. This will give considerable network transmission gains, without using any form of compression. Having a back-off (flow-control) capability through the ISUP when the network is overloaded means that when controlled carefully in this way, the network bandwidth used on the ATM network is known, and can be loaded with traffic up to the limits, without any statistical element in the traffic causing ATM cell loss.

There are different approaches to providing feedback depending on the signalling networks used. If the signalling is quasi-associated with the traffic, i.e. going on one of the same PCM connections as the traffic it is controlling, it is much simpler than if the signalling takes independent signalling transfer point (STP) paths.

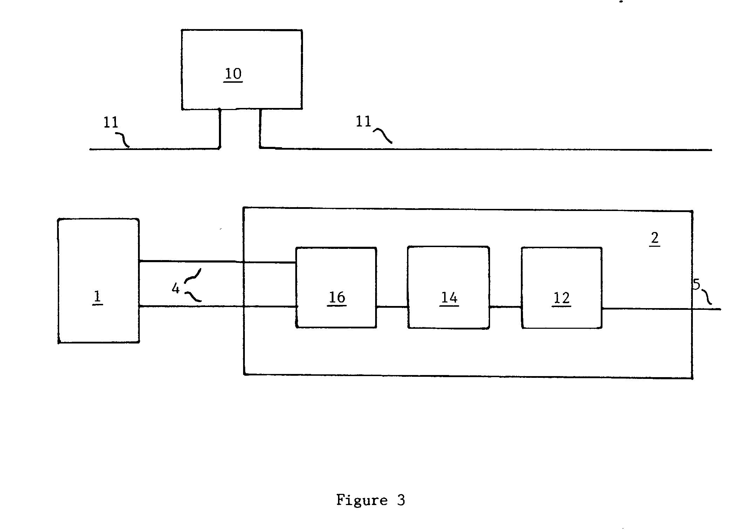

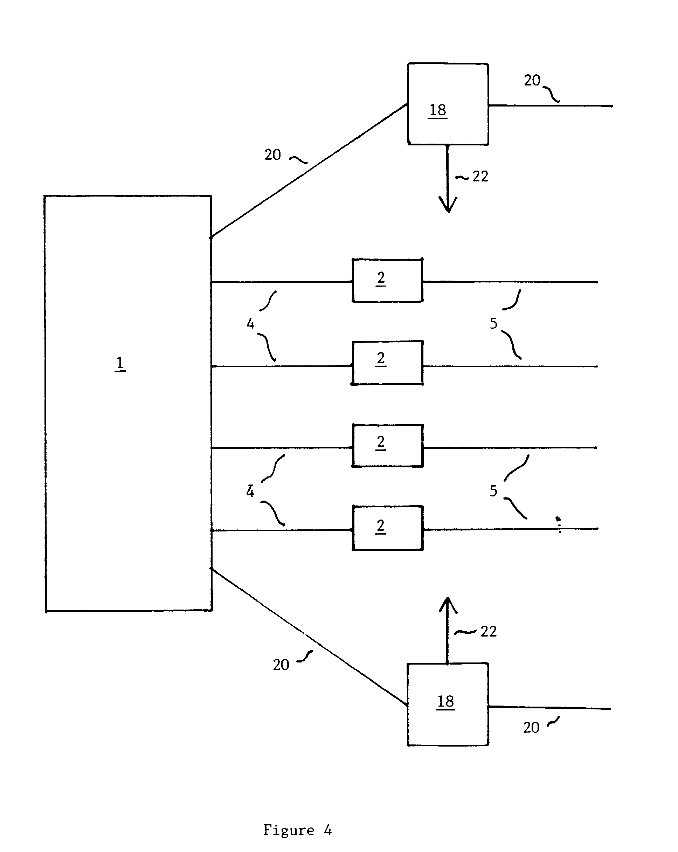

Features common to Figure 2 are given the same reference numerals in Figures 3 and 4.

Figure 3 shows exchange 1 associated with adapter 2 arranged to handle quasi-associated signalling.

As shown in Figure 3, in the quasi-associated case, the adapter 2 looks at the signalling as it goes through the adapter. In Figure 3 the block labelled 10 contains intelligence for handling the signalling on lines 11 and is shown separated from the adapter although it could be integrated with the adapter. The intelligence 10 operates at a higher layer of the signalling protocol than the data path. It need only look for call set-ups and releases. Only if the adapter approaches or reaches overload (on a route or as a whole) will it react to new calls on the affected routes forcing the new calls to clear. To do this the adapter needs to terminate the message transfer part (MTP) layer of ITU signalling system number seven (SS7) so that it can react to the signalling when necessary. Signalling is terminated (at the MTP layer), monitored and normally re-transmitted again. Releases of circuits are monitored to clear activity indications and set-ups for overload. In the event of an overload the adapter will send a release back indicating congestion.

The adapter also consists of STM interface 12, ATM interface 14 and digital signal processor (DSP) 16 interfacing to associated exchange 1 to handle data traffic.

Figure 4 shows exchange 1 associated with adapters 2 arranged to handle STP signalling. As shown in Figure 4, in the STP case the signalling path 20 is separate from the PCM traffic (i.e. data it controls) and passes from the exchanges to separate STPs (not shown). This signalling cannot be handled in an insecure adapter.

The signalling is monitored in a similar manner as for the quasi-associated case. However, separate secure units 18 handle signalling related to traffic passing through a number of adapters 2. Therefore secure units 18 need to pass on the results to the appropriate adapter. For this purpose each secure unit 18 is connected to each of the adapters 2 associated with exchange I (these connections being represented in the Figure for clarity by arrows 22). There will need to be a secure unit with a signalling monitor function for every link from the exchange to the STPs.

STP signalling is terminated at the MTP layer sufficiently to allow the identification of set-up and release messages (in both directions). The adapter defines a 1:1 correspondence between pairs of MTP layer 1 instances. More than one replica of this may be required in a single adapter unit. The signalling links are terminated at MTP layer 1, and data passed between them. This data is monitored by the application. Thus error correction by repeat transmission occurs end to end between the two exchanges. Signalling messages must be decoded by a MTP layer 2 and 3 type of function which routes the messages to the correct protocol, e.g. ISUP and discards other messages such as those for operation and maintenance administration part (OMAP) or signalling connection control part (SCCP). Finally the adapter application updates its record of circuit states to control compression algorithms and to enable transmission of ATM data. The adapter contains and manages the necessary data to associate the circuit/point-code identities used by signalling messages with the routes and PCM connections in its connection to the exchange. If any adjustment is made to signalling data by the adapter (for example to reject calls, or to insert congestion indications), then it is necessary to terminate the signalling link each side of the adapter at or above MTP layer 2.

In this cased the signalling links on each side of the adapter are more independent. This removes the possibility of end-to-end signalling link management by the exchanges, and requires link management functions at the adapter. This may require the adapter to provide types of signalling network management functions whose element management is normally associated with exchanges. The MTP layer 3 functions must be modified to route messages arriving from layer 2 on protocol identity instead of point code. ISUP and NUP messages are sent via the layer 4 functions to the adapter application, while other protocols (such as SCCP), and messages originating from layer 4, are routed on destination point code to the appropriate MTP layer 2 instance. Some degree of routing data management is required to identify the correct layer 2 for any particular message. When such a message is identified the relevant adapter 2 is informed. For set-up messages the adapter checks if there is capacity: if so it passes the set-up request on and marks the circuit as "in use", if not it sends back an appropriate release message with congestion indicated. Release messages are monitored so that the circuit can be freed. All set-up messages that do not result in congestion and all other messages are sent on through the adapter to the intended destination.

The adapter-CPS communications allows for a hybrid network with some integrated adapters (by which is meant adapters integrated into the associated exchange), adapters using Q.50 protocol and some with ISUP or NUP control. If ISUP flow control is used between a non-integrated adapter and the exchange associated with it, then there might be an effect on CPS - adapter communications at the far end.

In a further preferred embodiment the adapter 2 performs compression and/or echo control using information within the set-up message it monitors. Compression can be more effectively applied to speech than data calls, so it is necessary for the adapter to be able to distinguish call types. This may be done by a combination of the following methods:
- Using information from the call type parameters of signalling messages
- Detection of in-band tones
- Allocation of certain circuits to particular call types

All calls are initially sent at 64Kbps. When calls are set-up - the adapter examines the signalling that passes through, and records which calls are data calls. For non-data calls, the adapter looks for the start-up tone characteristic of modem traffic, if not seen the call is marked as "voice". If at any time the total traffic exceeds a threshold, the adapter starts to compress, the voice traffic. This could be dropping to 56Kbps PCM, or a better solution would be to transcode to 32Kbps ADPCM. If an adapter which is operating at normal 64Kbps PCM coding receives 32Kbps ADPCM, it too should swap to the lower rate coding. Operating at 64Kbps is necessary for data traffic. Modem traffic may drop back to 56Kbps for all modems, changing to ADPCM for lower speed modems.

Voice traffic may be carried in the form of ATM adaptation layer one or two (AAL1 or AAL2).

The adapter as a unit requires a lot more than the 64 PCMs that the integrated version needs. The total throughput would be the same however. Support of at least 128 PCMs and possibly in excess of 256 would be desirable, depending on the network.

The ISUP based adapter, will offer advantages in the network, such as transmission savings and single circuit network quantisation. The ISUP concept offers significant advantages in a multi-point network. The main saving is in transmission. The ISUP based adapter reduces the transmission requirements significantly, as it efficiently uses the whole of a large transmission pipe. The dynamic network allows routes between exchanges to change size, up to the limit of the physically installed number of the circuits between the adapter and the associated exchange that correspond to the route.

Advantageously the signalling processing that monitors and where required changes signalling could be in separate boxes which have communication to the adapters. An alternative is to apply the signalling processing within the adapters: the adapters associated with an exchange having some means of inter-communication. This inter-communication needs to be secure against the failure of any individual adapter. Suitable embodiments of this inter-communication include a pair of Ethernet Hubs, or PCM links to directly interconnect the adapters, or a communications path between them through the ATM network via the ATM cross-connects and the small mesh that exists between the cross-connects.

Such Ethernet hubs might also be useful from a management perspective. The Ethernet hubs would allow the adapter boxes to be managed from secure equipment that also used Ethernet hubs. Interconnecting using PCM links is an alternative if PCM links exist to the adapters but not if the adapters only have synchronous transfer mode one (STM-1) interfaces as defined in ITU-T standard G.707. Interconnecting via the ATM network has probably the lowest network cost.

For the adapters to operate in this environment, it is necessary for the adapters to exchange status information with distant adapters to ensure that they are operational and to pass on traffic-blocking information.

Periodically and when necessary (because of a status change) each adapter should send a cell to every other (far-end) adapter. This cell contains status information (a form of operations and maintenance (OAM) message) in three elements:
1. The received adapter status, i.e. the status of the adapter as viewed by the far-end adapter.
2. A "Hold" indication, that if set should cause the flow of new traffic to that adapter to be stopped.
3. Status information on PCM links/connections to the exchange - this reflects which PCM circuits can be used.
   When an adapter receives this status information the adapter responds as follows:
   1. If the far-end adapter is overloaded, it should force clear all calls and hold the route-busy (but still send its own check cells).
   2. If the far-end adapter requests a hold, stop any new set-ups, if it no longer requests a hold start accepting set-ups again. The adapter may persist the return state to prevent the network oscillating too much.
   3. If the far-end adapter has PCM failures, reflect those on to the alarm indication signal (AIS) of its transmitted PCM traffic.

In the UK much network signalling is based on National User Part (NUP) signalling protocol instead of ISUP. Although an embodiment of the present invention has been described with reference to ISUP, it would be apparent to the skilled worker in the field, notwithstanding the differences between Q.50, NUP and ISUP protocols, e.g. in the format of messages, that the present invention also applies to instances where the control of the flow of traffic in a telecommunication system between telephone exchanges and adapters is implemented according to NUP protocol or Q.50 protocol.

## Claims

1. A telecommunications system comprising a network of interconnected telephone exchanges and adapters, the adapters arranged to provide at least some of the telephone exchanges with a means of communication of traffic via the network in which the adapters are arranged to control traffic flow between the adapters and the telephone exchanges.

2. The telecommunications system of Claim 1 in which the adapters are arranged to implement the control of traffic flow according to ISDN User Part (ISUP) protocol.

3. The telecommunications system of Claim 1 in which the adapters are arranged to implement the control of traffic flow according to National User Part (NUP) protocol.

4. The telecommunications system of Claim 1 in which the adapters are arranged to implement the control of traffic flow according to Q.50 protocol.

5. The telephone system of any above claim in which each of the telephone exchanges comprise routing data relating to communication with each of the other telephone exchanges and in which the routing data is partially or wholly enabled.

6. The telecommunications system of any one of the above claims, in which the network of telephone exchanges comprises at least one trunk exchange.

7. The telecommunications system of any one of the above claims in which the adapters comprise means for converting the traffic between packetised and non-packetised form.

8. The telecommunications system of any one of the above claims in which the adapters comprise means for providing interworking between synchronous transfer mode (STM) and ATM domains.

9. The telecommunications system of any one of the above claims in which the adapters comprise means for detection of modem traffic.

10. The telecommunications system of Claim 9 in which the adapters comprise means for converting a detected modem signal to baseband data for conversion into ATM.

11. The telecommunications system of any one of the above claims in which the adapters comprise means for compression of voice traffic.

12. The telecommunications system of any one of the above claims comprising means for carrying voice traffic as ATM Adaptation Layer 1 (AAL1) or ATM Adaptation Layer 2 ( AAL2).

13. The telecommunications systems of any one of the above claims in which the adapters provide dynamic mapping between PSTN and ATM domains.

14. The telecommunications system of any one of the above claims in which the network comprises one or more cross-connects for interconnecting at least some of the telephone exchanges via the adapters.

15. The telecommunications system of Claim 14 arranged to handle telephone calls in which all call handling in the system takes place outside of the one or more cross-connects.

16. The telecommunications system of any one of Claims 14 and 15 as dependant from Claim 5 in which only that part of the routing data in each of the telephone exchanges relating to communication between that exchange and those others of the exchanges with which that exchange is arranged to communicate via the one or more cross-connects is enabled.

17. The telecommunications system of any one of Claims 14 and 15 as dependant from Claim 6 in which at least one trunk exchange is connected directly via one or more of the adapters to each of the one or more cross-connects.

18. The telecommunications system of any one of Claims 14 to 17 comprising at least one local exchange arranged to communicate via the one or more cross-connects.

19. The telecommunications system of any one of Claims 14 to 18 in which communication via the one or more cross-connects is via asynchronous transfer mode (ATM).

20. The telecommunications system of Claim 19 in which the communication is via ATM Virtual Paths (VPs) and/or ATM Virtual Circuits (VCs).
